# EUROPÄISCHE PATENTANMELDUNG

(11) **EP 1 130 224 A1**
(43) Veröffentlichungstag der Anmeldung: **05.09.2001**
(21) Anmeldenummer: 00123503.5
(22) Anmeldetag: 27.10.2000
(51) Int. Cl.: F01M 11/03

(54) **Flüssigkeitsfilter mit einem Kühler**

(30) Priorität: 21.12.1999 DE 19961579
(71) Anmelder: Filterwerk Mann & Hummel GmbH, 71638 Ludwigsburg (DE)
(72) Erfinder: Jainek, Herbert, 74074 Heilbronn (DE); Weindorf, Martin, 70806 Kornwestheim (DE); Dreher, Herbert, 72160 Horb (DE)
(74) Vertreter: Voth, Gerhard, Dipl.-Ing.

(57) **Zusammenfassung**

Flüssigkeitsfilter, insbesondere enthaltend eine Ölfilterpatrone 12, die in einem topfförmigen Gehäuse 10 mit Schraubdeckel 11 untergebracht ist, in den vorzugsweise ein Kühler 13 eingebaut ist. Die Erfindung zeichnet sich dadurch aus, daß im Ölkühler eine Ablaufbohrung 37a untergebracht ist, die Falle eines Filterwechsels zu einer vollständigen Entleerung des Kühlers führt. Damit kann ein restloser Austausch des Öls erfolgen, wodurch das ausgewechselte Öl nicht von vorne herein durch Ölrückstände verunreinigt wird. Hierdurch lassen sich die Wartungsintervalle verlängern. Um einen Kurzschluß der Ablauföffnung 37a während des Betriebs zu verhindern, wird diese mit Hilfe einer an den Schraubdeckel gekoppelten Ventilstange 33 verschlossen und durch Aufschrauben des Deckels geöffnet.

## Beschreibung

Die Erfindung betrifft einen Flüssigkeitsfilter, der mit einem Kühler für die zu filternde Flüssigkeit kombiniert ist und eine Ventilstange mit einer Dichtung zum Abschluß von Öffnungen enthält, die den Leerlauf des Filtergehäuses bei einem Ölwechsel erleichtern sollen, nach der Gattung des Patentanspruches 1. Außerdem betrifft die Erfindung einen Kühler, der zum Einbau in diese Filter-Kühlerkombination geeignet ist.

Ein Filter mit Ventilstange zum Verschluß einer Ablauföffnung ist z. B. aus der EP 612 549 B1 bekannt. Betrachtet man beispielsweise Figur 2 dieses Dokumentes, so wird das Funktionsprinzip der Ventilstange anhand des Einbaubeispiels deutlich. Ein Filterelement 14 ist in stehender Anordnung in einem Topfgehäuse 1 eingebaut. Das Topfgehäuse ist mit einem Schraubdeckel 2 verschlossen, wobei in den Deckel eine Ventilstange 3 integriert ist, welche an ihrem Ende eine Ablauföffnung für das noch im Filter befindliche Öl im Falle eines Ausbaus der Filterpatrone abdichtet. Diese Öffnung wird freigegeben, wenn der Schraubdeckel 2 geöffnet wird, da die Ventilstange durch den Schraubdeckel 2 axial zwangsgeführt wird. Hierdurch läßt sich eine weitgehende Restentleerung des Filtergehäuses erreichen, wodurch bei einem Filterwechsel vermieden wird, daß das Schmieröl in die Umwelt gelangt. Außerdem kann durch die restlose Entleerung ein vollständiger Ölwechsel erfolgen, was vorteilhaft ist, da Ölreste das neue Öl von Anfang an verunreinigen würden. Wird eine Filteranordnung der beschriebenen Art mit einem Kühler für die zu filternde Flüssigkeit kombiniert, so entsteht der Wunsch nach einem restlosen Leerlauf auch für den Ölkühler. Im Gegensatz zum Filterelement weist der Ölkühler jedoch eine komplexe Geometrie auf, so daß in diesem immer eine gewisse Restölmenge bleibt. Diese läßt sich auch nicht dadurch entfernen, daß durch die Ventilstange im Boden des Gehäuses eine Ablauföffnung freigegeben wird, da das Restöl in dem Kühlerelement selbst verbleibt.

Die Aufgabe der Erfindung besteht daher darin, einen Flüssigkeitsfilter mit einem Kühler zu schaffen, der vor einem Ölwechsel einen weitgehend restlosen Ablauf des Altöls gewährleistet. Diese Aufgabe wird durch die Merkmale des Patentanspruches 1 gelöst. Ferner wird gemäß Anspruch 7 ein Kühler beansprucht, der durch Einbau in einen Flüssigkeitsfilter die Aufgabe zu lösen vermag.

### Vorteile der Erfindung

Der erfindungsgemäße Flüssigkeitsbehälter weist ein topfförmiges Gehäuse auf, dessen Öffnung bezogen auf die Schwerkraft nach oben weist. Der Topf muß nicht senkrecht nach oben weisen, er kann auch schräg nach oben weisen. In den Topf ist eine Filterpatrone eingebaut, die von dem zu filternden Fluid von einem Einlaß zu einem Auslaß hin durchströmt werden kann. Ein Kühler ist unterhalb der Filterpatrone angeordnet. Dieser weist einen Eintritt für das gefilterte Fluid auf, der mit der Reinseite der Filterpatrone kommuniziert. Dies kann z. B. dadurch erreicht werden, daß der Kühler ebenfalls in den Topf des Gehäuses eingebaut wird und über Dichtungen mit den entsprechenden Anschlüssen kommuniziert. Eine andere Möglichkeit ist die Anordnung des Kühlers unter dem Filtergehäuse, wobei in diesem Fall das Gehäuse sowie der Kühler miteinander kommunizierende Anschlüsse aufweisen müssen. Diese Anschlüsse müssen den Fluidkreislauf des zu filternden Fluids durch Filterpatrone und Kühler und den Kreislauf eines Kühlmediums im Kühler gewährleisten. In beiden Einbausituationen weist der Kühler jedoch eine Auslauföffnung auf, die durch eine Dichtung verschlossen wird. Diese Dichtung ist an einer Ventilstange angebracht, welche derart mit dem Schraubdeckel des Gehäuses verbunden ist, daß durch diese Verbindung ihr Axialspiel begrenzt wird. Dabei kann ein definiertes Axialspiel vorgesehen sein, wobei auch der Fall eingeschlossen ist, daß das Axialspiel gleich null ist. Zur Fixierung der Ventilstange im Schraubdeckel kann z. B. eine Schnappverbindung vorgesehen sein, die ein gewisses Axialspiel erlaubt. Eine andere Möglichkeit be-steht darin, die Ventilstange fest in den Schraubdeckel zu fügen, z. B. durch eine Klebeverbindung, oder sogar einteilig mit dem Schraubdeckel herzustellen.

In jedem Fall führt die Axialfixierung der Ventilstange im Schraubdeckel dazu, daß durch Abschrauben desselben die Dichtung von der Auslauföffnung im Kühler weg bewegt wird. Die Auslauföffnung ist derart am Kühler angebracht, daß sie dessen Leerlaufverhalten begünstigt. Wird dieser Kühler z. B. für den Schmierölkreislauf einer Brennkraftmaschine genutzt, so kann bei einem Ölwechsel der Kühler mit Hilfe der Auslauföffnung vollständig oder zumindest weitgehend entleert werden, so daß das frische Öl nicht sofort durch Ölrückstände des verbrauchten Öls verunreinigt wird. Hierdurch lassen sich höhere Motorstandzeiten sowie längere Ölwechsel- Intervalle erreichen, wodurch die Funktionszuverlässigkeit der zugehörigen Brennkraftmaschine steigt sowie eine Erhöhung der Wirtschaftlichkeit im Betrieb der Brennkraftmaschine erreicht wird.

Während des Betriebs des Kühlers verhindert die Dichtung wirksam einen Kurzschluß der Kühlerkanäle, die dessen Kühlleistung verringern würden. Da der Kühler keine Filterfunktion hat, ist jedoch eine vollständige Abdichtung nicht notwendig, eine gewisse Restleckage ist technisch vertretbar. Daher müssen an die Dichtung keine hohen Anforderungen gestellt werden. Die Dichtung kann zwar aus einem Elastomer gefertigt sein, jedoch ist es auch denkbar, diese durch eine entsprechende geometrische Ausgestaltung der Ventilstange zu erzeugen.

Gemäß einer weiteren Ausgestaltung der Erfindung weist die Ventilstange eine Zusatzdichtung auf, welche eine Ablauföffnung im Topf dichtend verschließt. Dadurch wird die Ablauföffnung ebenso durch die Montage des Schraubdeckels geöffnet und kann den Leerlauf des gesamten Filtergehäuses begünstigen. Dabei kann die Ablauföffnung auch verwendet werden, um das aus dem Kühler austretende Fluid aus dem Gehäuse abzuführen.

Eine besondere Variante sieht vor, daß im Kühler ein Zentralrohr untergebracht ist, welches mit der Auslauföffnung versehen ist. Die Ventilstange kann dann in dieses Zentralrohr hineinragen und dort die Auslauföffnung abdichten. Ist der Kühler in Plattenbauweise hergestellt, hat das Zentralrohr zusätzlich fertigungstechnische Vorteile. Es durchstößt die einzelnen Platten und wird mit diesen verlötet um die entsprechenden Räume in dem Kühler für das zu kühlende Fluid sowie für das kühlende

Fluid zu schaffen.

Das Zentralrohr wie auch die Ventilstange müssen in der Drehachse des Schraubdeckels angeordnet sein. Auf diese Weise wird gewährleistet, daß bei Drehung des Schraubdeckels keine Kollision der Ventilstange mit Einbauteilen im Innenraum des Filtergehäuses erfolgt. Durch Drehung des Schraubdeckels wird die notwendige Axialverschiebung der Ventilstange erreicht, welche zur Öffnung von Auslauföffnung bzw. Ablauföffnung führt.

Eine andere Möglichkeit besteht darin, die Auslauföffnung in der Bodenplatte des Kühlers vorzusehen. Hierbei muß jedoch der Kühler als Einbauteil in das Gehäuse eingesetzt werden, wobei dabei ein Zwischenkanal entsteht, welcher teilweise durch die Bodenplatte des Kühlers und teilweise durch den Topf des Gehäuses gebildet wird. In diesen Kanal mündet die Auslauföffnung des Kühlers, wodurch durch deren Öffnung die Fluidreste aus dem Kühler entfernt werden können. Der Zwischenkanal muß eine Verbindung entweder zum Auslaß oder zu der Ablauföffnung im Topf des Gehäuses aufweisen. Durch diese Anordnung läßt sich ein besonders schneller Ablauf des Fluids aus dem Kühler erreichen.

Gemäß einer weiteren Ausgestaltung der Erfindung ist die Ventilstange an einem Stützrohr befestigt, welches die Filterpatrone aufnimmt. Das Stützrohr muß dann seinerseits mit dem Schraubdeckel verbunden sein, um dadurch das Axialspiel der Ventilstange zu begrenzen. Auf dem Stützrohr ist die Filterpatrone fixiert, was bevorzugt durch Aufstecken der Filterpatrone mit mindestens einer Endscheibe auf das Stützrohr erfolgt. Die Befestigung der Ventilstange an dem Stützrohr kann durch eine entsprechende Verbindung, z. B. eine Schnapp- oder Klebeverbindung erfolgen. Stützrohr und Ventilstange können jedoch auch einteilig hergestellt sein. Der Vorteil dieser Anordnung besteht in einer Materialersparnis, da die Ventilstange nicht bis zum Schraubdeckel geführt werden muß. Das Stützrohr ist ein Bauteil, was konstruktionsbedingt sowieso vorgesehen werden muß.

Eine weitere günstige Ausführungsform erhält man, wenn man zwischen der Filterpatrone und dem Kühler einen Verbindungsstutzen vorsieht, der diese beiden Bauteile dichtend miteinander verbindet. Das Fluid kann dann von einer Reinseite direkt zu einem Eintritt im Kühler geleitet werden. Vorteilhaft ist dieser Verbindungsstutzen derart ausgeführt, daß die Filterpatrone mit ihrer unteren Endscheibe dichtend auf diesen Stutzen aufgeschoben werden kann. Hierdurch ist gleichzeitig eine Dichtung gewährleistet, da die Endscheibe elastisch nachgibt. Die andere Seite des Verbindungsstutzen stützt sich bevorzugt auf der Deckelplatte des Kühlers ab, welcher gleichzeitig den Eintritt für das zu kühlende Fluid aufweist. Hierdurch kann eine Anpassung verschiedener Filterpatronen auf dem Kühler durch die Modifikation eines einfachen Bauteils erreicht werden. Dies wirkt sich vorteilhaft auf die Fertigungskosten von Filterbaureihen aus.

Ein Kühler gemäß Anspruch 7 ist dazu geeignet mit dem beschriebenen Flüssigkeitsfilter zusammen zu wirken. Dies kann entweder durch Einbau in den Gehäusetopf oder durch Anbau an denselben erfolgen. Für den zweiten Einbaufall muß gewährleistet sein, daß die Ventilstange aus dem Topf des Gehäuses heraus in den angebauten Ölkühler hineinreichen kann. Außerdem muß in diesem Fall gewährleistet sein, daß das aus dem Kühler ablaufende Fluid entweder aufgefangen werden kann oder dem Fluidkreislauf zugeführt wird. Um in das erfindungsgemäße System eingebaut werden zu können, benötigt der Kühler die bereits beschriebene Auslauföffnung.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: einen Filter mit topfförmigen Gehäuse und eingebautem Ölkühler im Längsschnitt und
die Figuren 2 bis 4 die Varianten des Details X aus Figur 1.

### Beschreibung der Ausführungsbeispiele

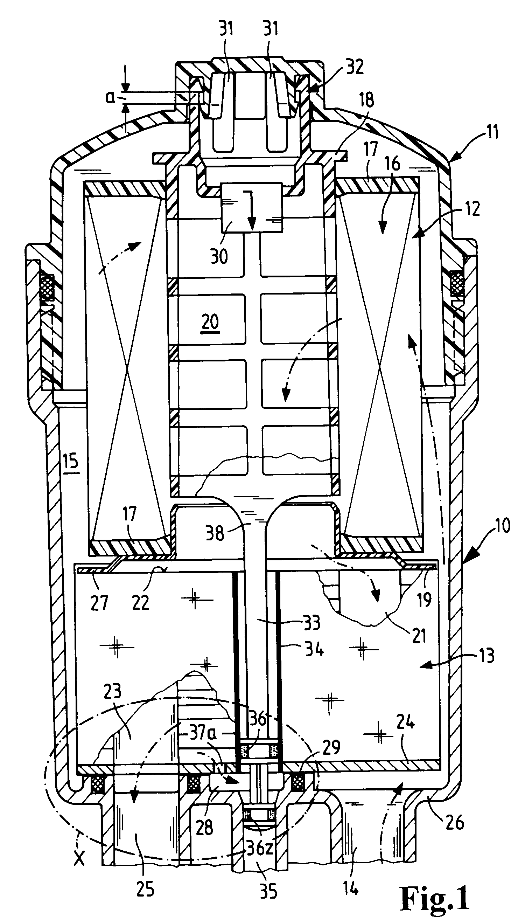

Der Filter gemäß Figur 1 weist ein Gehäuse mit einem Topf 10 und einem Schraubdeckel 11 auf, welcher mit dem Gehäuse dichtend verschraubt ist. Im Inneren des Gehäuses sind eine Filterpatrone 12 und ein Kühler 13 derart angeordnet, daß das zu filternde und zu kühlende Öl den durch Pfeile angedeuteten Verlauf durch den Filter nimmt.

Das Öl gelangt durch einen Einlaß 14 auf eine Rohseite 15, die durch das Gehäuse gebildet wird. Von dort durchtritt es durch ein Filtermedium 16, welches über Endscheiben 17 dichtend auf einem Stützrohr 18 und einem Verbindungsstutzen 19 montiert ist, eine Reinseite 20 im Innenraum der Filterpatrone 12. Über den Verbindungsstutzen 19 wird das Öl weiter zu einem Eintritt 21 geleitet, welcher in einer Deckelplatte 22 des Kühlers 13 untergebracht ist. Es durchläuft den Kühler in nicht näher dargestellter Weise und erreicht so einen Austritt 23 in einer Bodenplatte 24 des Kühlers 13. Der Austritt ist mit einem Auslaß 25 im Gehäuse verbunden. Der Kühler weist weiterhin nicht dargestellte Anschlüsse für das Kühlwasser auf, die z. B. vor und hinter der Zeichenebene mit Anschlüssen in einem Boden 26 des Topfes 10 verbunden sein können. Deren konstruktive Ausgestaltung kann derjenigen des Auslasses 25 entsprechen.

Um den beschriebenen Fluidkreislauf im Normalbetrieb zu gewährleisten, müssen die verschiedenen Bauteile gegeneinander abgedichtet sein. Die Filterpatrone 12 wird über die Endscheiben 17, die eine Eigenelastizität besitzen, über das Stützrohr 18 bzw. den Verbindungsstutzen 19 abgedichtet. Der Verbindungsstutzen 19 weist einen elastischen Rand 27 auf, der sich auf der Deckelplatte 22 des Ölkühlers abstützt und so die Verbindung zwischen Reinseite 20 und Eintritt 21 schafft. Durch die Elastizität des Randes ist auch an dieser Stelle die Dichtwirkung gegeben. Alternativ kann der Verbindungsstutzen 19 auch als teil des Ölkühlers ausgeführt und mit diesem verlötet sein. Damit wird gleichzeitig die Dichtproblematik gelöst. Der Auslaß 25 bzw. ein Zwischenkanal 28 sind durch eine im Boden 26 angebrachte Formdichtung 29 gegenüber der Bodenplatte 24 des Kühlers 13 abgedichtet. Dies ist notwendig, da der durch das Gehäuse gebildete Innenraum zur Rohseite 15 des Filters gehört.

Eine weitere Funktion des Filters wird durch das schematisch dargestellte Umgehungsventil 30 gewährleistet. Im Falle eines zu hohen Druckanstiegs am Filtermedium 16 öffnet das Umgehungsventil um die Versorgung der Brennkraftmaschine mit Schmieröl zu gewährleisten. Dabei läuft das Öl durch Öffnungen 31 in einer Schnappverbindung 32 mit deren Hilfe das Stützrohr 18 im Schraubdeckel 11 befestigt ist, und gelangt durch das Umgehungsventil 30 direkt auf die Reinseite 20 des Filters. Die Schnappverbindung 32 sorgt durch ein begrenztes Axialspiel a dafür, daß eine am Stützrohr 18 befestigte oder in dieses integrierte Ventilstange 33 entsprechend der Öffnungsrichtung des Schraubdeckels 11 mitgenommen wird. Die Ventilstange 33 ist in einem Zentralrohr 34 im Ölkühler untergebracht. Von dort reicht sie weiterhin in eine Ablauföffnung 35 im Boden 26. Die Ventilstange 33 weist sowohl im Bereich des Zentralrohres 34 als auch im Bereich der Ablauföffnung 35 O-Ringe 36, 36z auf, die sich an den jeweils umgebenden Wandungen abstützen und dadurch eine Dichtung hervorrufen. Damit ist der Zwischenkanal 28 vollständig vom Fluidkreislauf und den mit dem Gehäuse kommunizierenden Öffnungen abgetrennt. Hierzu leistet zusätzlich die Formdichtung 29 einen Beitrag. Dies hat zur Folge, daß während des normalen Betriebs des Filters kein Öl durch eine Auslauföffnung 37a, die in der Bodenplatte 24 des Kühlers untergebracht ist, gelangen kann, da diese in den abgedichteten Zwischenkanal 28 mündet. Natürlich wird sich der Zwischenkanal zunächst mit Öl füllen. Anschließend ist ein weiterer Ölfluß durch die Auslauföffnung 37a nicht mehr möglich.

Die Ventilstange 33 befindet sich genau in einer durch das Gewinde des Schraubdeckels 11 vorgegebenen Drehachse 38, so daß die Ventilstange, die über das Mittelrohr 18 mit dem Schraubdeckel 11 gekoppelt ist, mit diesem zusammen aus dem Topf 10 entfernt werden kann. Dabei wird zunächst die Ablauföffnung 35 freigegeben, wodurch der Kühler 13 unter Einsatz der Auslauföffnung 37a leerlaufen kann. Bei herausgezogener Ventilstange kann das Zentralrohr 34 zusätzlich als Ablaufkanal für das im Gehäuse befindliche Öl genutzt werden, welches dadurch die Ablauföffnung 35 erreicht.

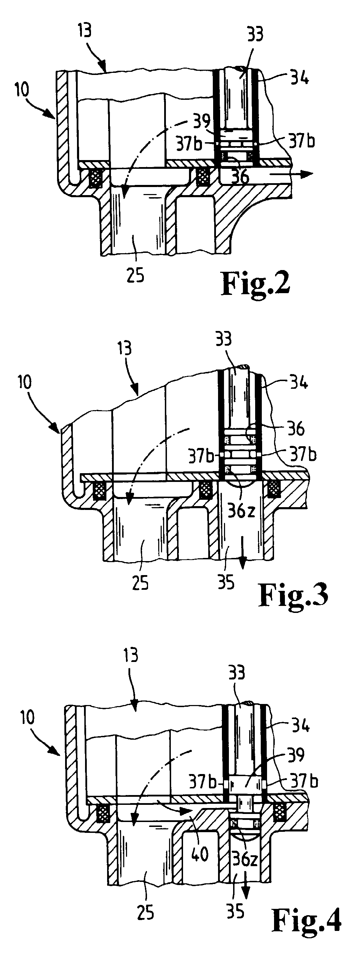

In Figur 2 ist eine andere Variante für den Filterleerlauf dargestellt. Eine Auslauföffnung 37b ist im Zentralrohr 34 des Kühlers 13 untergebracht. Diese wird durch einen O-Ring 36 sowie eine Scheibe 39 gegenüber dem restlichen Gehäuseraum abgedichtet. Wird die Ventilstange durch Aufschrauben des hier nicht dargestellten Dekkels aus der Zentralbohrung herausgezogen, so kann das im Kühler befindliche Öl über die Auslauföffnung 37b, die sich bevorzugt in der untersten, nicht dargestellten Wanne des Ölkühlers befindet, in den Gehäuseinnenraum auslaufen.

In Figur 3 ist eine weitere Variante für den Kühlerleerlauf dargestellt. Die Auslauföffnung 37b ist ebenfalls im Zentralrohr 34 untergebracht. Die Ventilstange 33 weist einen O-Ring 36 und einen weiteren zusätzlichen O-Ring 36z auf. Die Auslauföffnung 37b ist zwischen den beiden O-Ringen angebracht, wobei der O-Ring 36 eine Abdichtung zum Inneren des Filtergehäuses und der O-Ring 36z eine Abdichtung zur Ablauföffnung 35 erzeugt. Wird die Ventilstange 33 durch Aufschrauben des nicht dargestellten Deckels angehoben, so kann das Öl aus dem Ölkühler 13 durch die Ablauföffnung 35 hinausfließen.

Eine weitere Variante für den Ölablauf aus dem Filtergehäuse stellt Figur 4 dar. Die Auslauföffnung 37b ist auch bei dieser Variante im Zentralrohr 34 vorgesehen und wird über eine Scheibe 39 verschlossen. Diese überdeckt bei dieser Variante die Auslauföffnung 37b vollständig. Die Ablauföffnung 35 ist durch einen O-Ring 36z am Ende der Ventilstange 33 verschlossen. In dieser Variante kann die Auslauföffnung 35 zusätzlich verwandt werden, um einen Leerlauf des Filtergehäuses zu gewährleisten. Hierfür ist ein Zusatzkanal 40 vorgesehen, der auch bei eingebautem Kühler 13 eine Entleerung des gesamten Filtergehäuses über den im Kühler für das Öl vorgesehenen Weg ermöglicht. Damit läßt sich insbesondere die Ablaufgeschwindigkeit erhöhen, wodurch der Wartungsvorgang erleichtert wird.

Selbstverständlich können am Ölkühler auch mehrere Auslauföffnungen 37a, b vorgesehen werden. Auch hierdurch läßt sich die Auslaufgeschwindigkeit des Restöls vergrößern. Insbesondere können auch Auslauföffnungen 37b im Zentralrohr mit Auslauföffnungen 37a in der Bodenplatte kombiniert werden.

## Patentansprüche

1. Flüssigkeitsfilter, insbesondere Ölfilter für den Schmierölkreislauf einer Brennkraftmaschine, enthaltend ein Gehäuse, bestehend aus einem Topf (10), dessen Öffnung bezogen auf die Schwerkraft nach oben weist, und einem Schraubdeckel (11), wobei
- eine Filterpatrone (12) eine mit einem Einlaß (14) verbundene Rohseite (15) von einer mit einem Auslaß (23) verbundenen Reinseite (20) trennend in das Gehäuse eingebaut ist,
- entlang einer Drehachse (38) des Schraubdeckels (11) eine Ventilstange (33) mit einer Dichtung (36, 39) verläuft, deren auf den Schraubdeckel (11) bezogenes Axialspiel durch diesen begrenzt ist und
- ein Kühler (13) unterhalb der Filterpatrone angeordnet ist, der von der Flüssigkeit durchstömbar ist,
**dadurch gekennzeichnet,** dass die Ventilstange (33) mindestens eine Dichtung (36, 39) aufweist, die eine Auslauföffnung (37a,b) im Kühler (13) gegenüber dem Fluidstrom und den mit dem Gehäuse kommunizierenden Anschlüssen (14, 25, 35) abgedichtet ist, wobei durch Demontage des Schraubdeckels die Auslauföffnung öffenbar ist.

2. Flüssigkeitsfilter nach Anspruch 1, **dadurch gekennzeichnet,** dass die Ventilstange eine Zusatzdichtung, insbesondere ein O-Ring (36z) aufweist, die eine Ablauföffnung (35) im Topf (10) dichtend verschließt, wobei durch Demontage des Schraubdeckels (11) die Ablauföffnung öffenbar ist.

3. Flüssigkeitsfilter nach einem der vorherigen Ansprüche, **dadurch gekennzeichnet,** dass die Auslauföffnung (27b) in einem Zentralrohr (34) im Kühler (13) untergebracht ist, in das die Ventilstange (33) hineinragt.

4. Flüssigkeitsfilter nach einem der Ansprüche 1 oder 2, dadurch gekennzeichnet, dass der Kühler (13) mit dem Topf (10) einen Zwischenkanal (28) bildet, in den die die in einer Bodenplatte (24) des Kühlers befindliche Auslauföffnung (37a) mündet.

5. Flüssigkeitsfilter nach einem der vorherigen Ansprüche, **dadurch gekennzeichnet,** dass die Ventilstange an einem Stützrohr (18) befestigt ist, auf dem die Filterpatrone (12) fixiert ist und dessen auf den Schraubdeckel (11) bezogenes Axialspiel durch diesen begrenzt ist.

6. Flüssigkeitsfilter nach einem der vorherigen Ansprüche, **dadurch gekennzeich net,** dass zwischen Filterpatrone und Kühler ein Verbindungsstutzen (19) vorgesehen ist, der sich dichtend an der Filterpatrone (12) abstützt und am Kühler (13) derart befestigt ist, daß eine Verbindung zwischen der Reinseite (20) des Filters und einem Eintritt (21) für das gefilterte Fluid in den Kühler entsteht.

7. Kühler (13) für den Einbau in einen Flüssigkeitsfilter, **dadurch gekennzeichnet,** dass dieser eine Auslauföffnung (37a,b) aufweist, die durch den Einbau in einen Flüssigkeitsfilter gemäß einem der vorhergehenden Ansprüche verschließbar ist.
